Europäisches Patentamt

European Patent Office

Office européen des brevets

(11) Publication number:

**0 304 408**
**A2**

## (12) EUROPEAN PATENT APPLICATION

(21) Application number: 88850269.7

(22) Date of filing: 18.08.88

(51) Int. Cl.⁴: **B 23 P 6/00**

(30) Priority: 21.08.87 SE 8703256

(43) Date of publication of application:
22.02.89 Bulletin 89/08

(84) Designated Contracting States:
AT CH DE ES FR GR IT LI

(71) Applicant: HYDROLIN AB
Box 742
S-801 28 Gävle (SE)

(72) Inventor: Stahlberg, Gösta
Lenasvägen 10
S-810 28 Järbo (SE)

(74) Representative: Grennberg, Erik Bertil et al
H. ALBIHNS PATENTBYRA AB P.O. Box 3137
S-103 62 Stockholm (SE)

(54) A Renovating Machine.

(57) For the purpose of renovating a turbine chamber a cruciform support (2) is attached to the lower part of the chamber and a further cruciform support (20) is attached to the upper part of the chamber, and a rotatable and raisable and lowerable tool holder (16′) is arranged between the supports for carrying out precision work on the chamber wall. The machine includes a pillar (6) which is rotatably journalled on a thrust bearing (5) and two radial plane bearings (8, 11). Attached to the pillar is a slide path (15) having guide screws (16). A platform (16) is guided in the slide path. The pillar (6) is driven for rotation by a motor (30) and the guide screws (16) are forcibly rotated together with the pillar (6).

FIG.1

EP 0 304 408 A2

## Description

## A renovating machine

This invention relates to a method and a machine for renovating vertical turbine chambers in hydroelectric power stations. More specifically, the invention relates to a method according to Claim 1 and to a machine according to Claim 4 for putting the method into effect.

A hydroelectric turbine generator of the kind meant here comprises a water turbine having a vertical shaft whose upper end has mounted thereon the rotor of an electric generator. The lower end of the shaft carries the runner or impeller of the actual turbine itself, said turbine being located in a vertical turbine chamber defined by a surface of rotation which is particularly configured to afford maximum turbine efficiency. Located in the vicinity of the upper part of the surface of rotation is an arrangement of guide vanes which direct the flow of water onto the runner. In the case Kaplan-turbines, the guide vanes are located vertically above the edge of the well-like turbine chamber, with axes journalled at the bottom thereof adjacent the "well edge" and at the top thereof to a cover member which is carried by a ring of posts or pillars and through which the turbine shaft extends. The water thus enters radially from all directions and flows past the ring of rotatable guide vanes, and is deflected down into the vertical turbine chamber and flows past the runner and then exits from the turbine.

Very high demands are placed on the turbine chamber. The gap between the outer rim of the runner and the chamber wall is preferably small, in the order of 3 mm in the case of runners of standard diameters, which may vary from 4 to 8 m. In view of the large dimensions involved, the requirements of relative precision are high. Furthermore, any irregularities in the surface of the chamber wall will give rise to cavitations. Consequently, it has been considered necessary, in the case of many power stations, to inspect the turbine chamber at relatively close intervals and to endeavour to maintain the turbine in good condition, by welding-on and machining techniques, which ultimately, with successive repairs and renovations, becomes a progressively thankless task.

The turbine chamber is normally constructed in sections, from castings which are cast in a concrete foundation.

The object of the invention is to improve the possibility of renovating turbine chambers and to restore said chambers to an almost new condition and to a high degree of precision, both with respect to surface fineness and roundness, and with respect to sustaining the desired variation in profile in the longitudinal direction, such as to achieve optimum efficiency and/or power output. When carrying out such renovation work it is often desired to modify the turbine at the same time, and hence machining of the chamber wall must be carried out to a high level of precision.

The inventive object is achieved in accordance with the invention by a method according to Claim 1.

The method can be put into effect with the aid of the machine according to Claim 3. The subordinate claims define preferred embodiments.

When carrying out renovation work of the kind meant here, there is first established the position of the central shaft. In view of the fact that in the case of an older turbine, the turbine chamber will have been subjected to successive repair of cavitational damage, corrosion damage, etc. it is generally suitable, before dismantling the turbine, to establish the position of the shaft in relation to fixed points in the aforesaid pillars, and then to dismantle the turbine.

A yoke or cruciform support is then mounted on the lower part of the turbine chamber and attachment devices are screwed into the chamber wall. A further yoke or cruciform support is then mounted above the turbine chamber, for instance through the holes in which the pivotal guide vanes are otherwise mounted. (This applies to Kaplan-turbines). There is then mounted between the two yokes or cruciform supports a pillar which is placed on a thrust bearing on the lower cruciform support and journalled in bearings in both the upper and the lower cruciform supports. Mounted on the thus rotatable column is a carriage which can be moved vertically and on which various kinds of tools for machining or working the turbine chamber wall can be carried. The rotatable structure is centered in relation to the previous measurement of the fixed points.

This machine can then be used to machine and work the wall of the turbine chamber, e.g. to machine the wall surface clean, and by milling or with the aid of a lathe tool to remove poor material, to apply fresh material, and to machine the chamber wall to a high degree of precision and surface fineness. In this case, there is preferably provided parallel with the centre axis of the machine a template or like device whose contours are followed by the machine tool or measuring device concerned during a working operation. Instead of using a template, vertical and horizontal length measuring devices may be fitted and coordinates collected from a suitably programmed computer. Both of these alternatives will achieve precision in roundness and profile accuracy.

The shaft is preferably rotated by means of a guide motor located above the upper cruciform support. Because the welding-on of fresh material needs to be effected at a much slower speed than machining with a lathe tool, it is advantageous to include a variable speed gear or transmission. On the other hand, when welding-on the only resistance to rotation is that offered by the bearings, and in this case a speed-controlled motor which has a poor torque at low speeds can suffice.

The rotatable pillar will preferably comprise a relatively heavy-gauged hollow tube, the upper part of which has provided therein holes by means of which rope blocks or sheaves can be fitted to the column, wherein a counterweight is mounted within the hollow tube so as to compensate at least partly for the weight of the vertically movable part of the machine. This vertically movable part is preferably complemented with a working platform.

The invention will now be described with reference to an exemplifying embodiment which has been tested in practice in the renovation of a turbine chamber of a Kaplan turbine having a maximum power output of 17 MW and a runner diameter of 4.56 m.

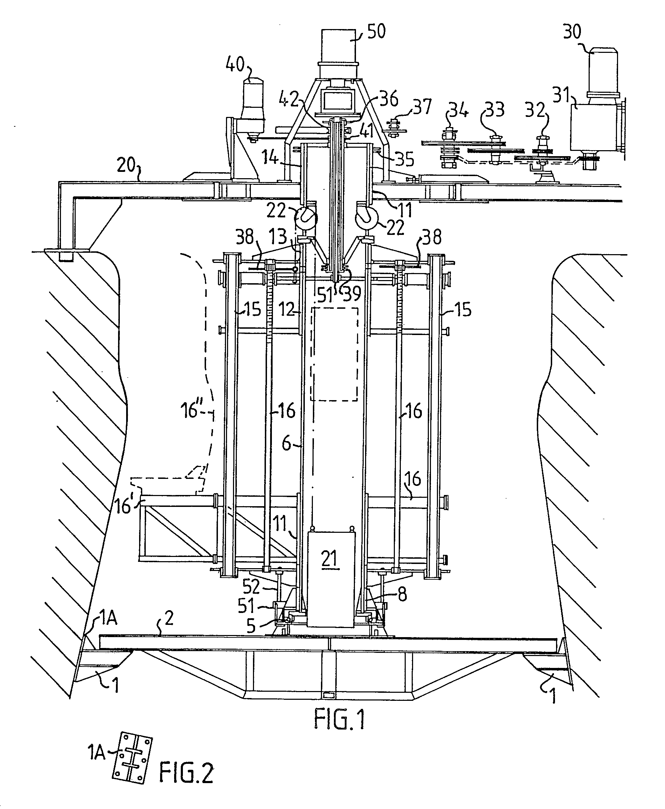

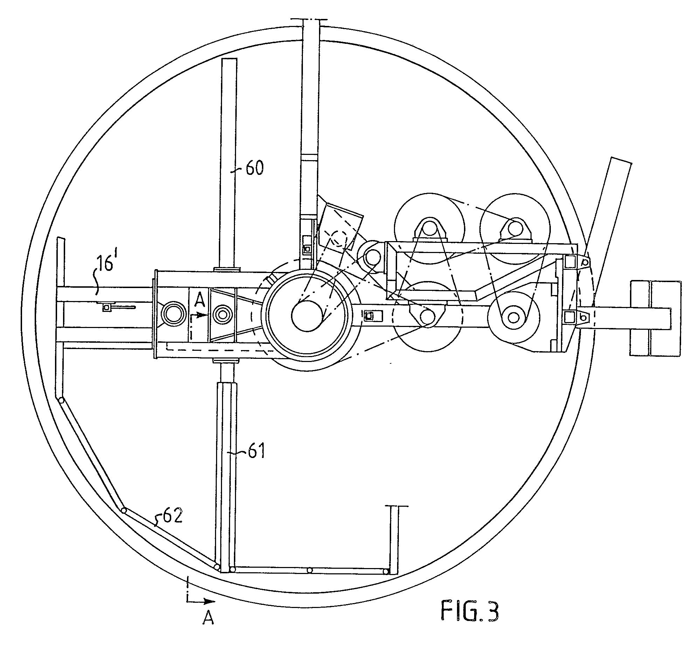

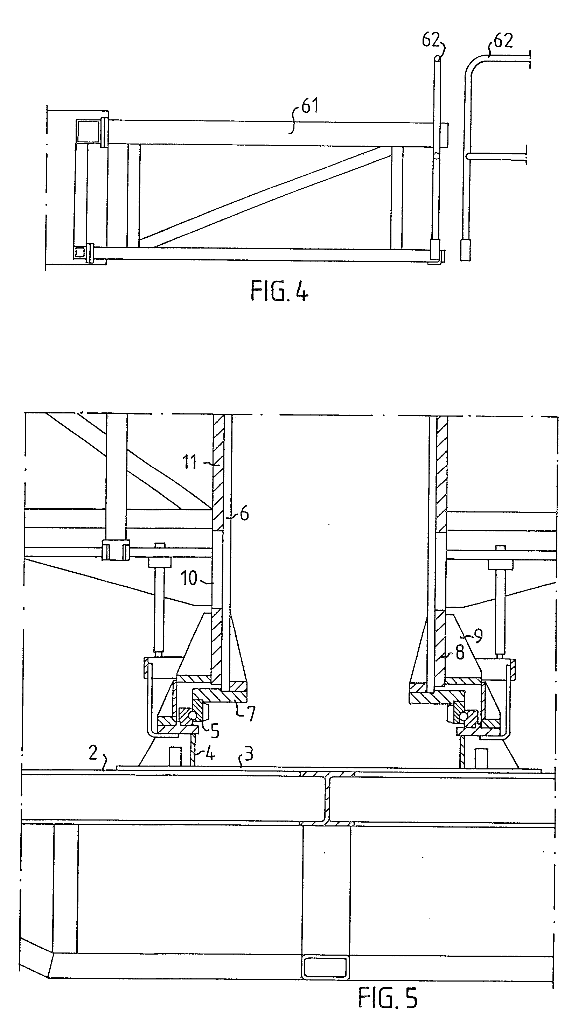

Fig. 1 is a vertical cross-sectional view of a machine for renovating a turbine chamber. Fig. 2 illustrates a fastener or attachment element. Fig. 3 illustrates the machine of Fig. 1 from above. Fig. 4 is a view taken in the direction of arrows A-A in Fig. 3. Fig. 5 illustrates journalling of the column in larger scale.

When the inventive apparatus is used for the illustrated purpose, there is first established the axial centre of the turbine in relation to selected fixed points on the column, while the turbine is still in its assembled state. Subsequent to dismantling the turbine, a cruciform support is attached to the bottom of the turbine chamber. To this end, four shelves or ledges 1 (Fig. 1) are attached in position with the aid of associated attachment plates 1A (see also Fig. 2) which are secured to the wall with the aid of bolts and a chemical anchoring agent. The cruciform support 2 which is intended to support the weight of the machine is then placed on the ledges 1, whereafter the machine is placed on the support and the upper cruciform support 20 is mounted and the shaft is centered accurately with the aid of positioning screws not shown. A precision of some tenths of a millimeter is sought for in this latter respect.

The manner in which the shaft 6 is mounted is illustrated in Fig. 1, and Fig. 5 illustrates the bottom mounting of the shaft in larger scale. The lower part of the shaft is terminated with an annulus 7 which carries the inner race of a thrust ball bearing 5 of the same kind as that used for the swivel ring of a mechanical digger, with a diameter of 850 mm. The outer race is mounted on a foundation or support 4 with the aid of setting or positioning screws not shown. Also attached to the foundation 4 is a plain-bearing ring 8 which is reinforced with lugs 9 and in which the hollow shaft or tube 6 is journalled radially. A corresponding plain-bearing ring 11 is mounted in the upper cruciform support 20. The shaft 6 is therewith journalled at both ends in a radial direction and at its lower end also in an axial direction with H-tolerance in the radial bearings, which have a diameter of 700 mm and a material thickness of 25 mm.

The shaft has firmly fitted thereto a vertical slide arrangement which has two hard chromium plated columns 15 140 mm in diameter, and two guide screws or spindles 16 (70x10 trapezium threads) attached to horizontal support arms, which are in turn firmly connected to the top and the bottom of the rotatable shaft 6 by means of respective clamping rings 10, 13. This frame-like structure supports a vertically slidable carriage, which is shown in both its upper and lower positions in Fig. 1. A tool carrier 16' can be mounted on the carriage. The weight of the carriage is relieved by a counterweight 21 which is located within the hollow shaft 6 and which is joined to the carriage by lines which pass over blocks or sheaves 22. In the illustrated case, the movable part weighs 2400 kg and the counterweight 1530 kg.

The machine is driven by means of a speed-controlled main motor 30 having a gear box 31, said drive being accomplished through drive chains and an alternative speed gear, either via sprocket wheels on axles 32, 33, 34 to a sprocket wheel 35 mounted on the shaft 6, or directly from the gear box 31 via the axle 34 and the sprocket wheel 35, at a lower transmission ratio. Drive chains also extend from a sprocket wheel on the axle 34, via the axle 37, to a sprocket wheel 36 mounted on an axle which is rotatably mounted within the hollow shaft 6 and which has provided at the bottom thereof a sprocket wheel 39 which drives sprocket wheels 38 on respective guide screws 16, via drive chains. Thus, a compulsory drive state prevails between driving of the shaft 6 and driving of the guide screws or spindles 16.

The main motor 30 has an output of 11 kW and the gear box 31 has a nominal output speed of 14.5 rpm, which when machining with a lathe tool enables the machine to be rotated at peripheral speeds of 10-40 m/min, and at peripheral speeds of 0.3-1.2 m/min when welding.

In order to enable the carriage to be lowered quickly, there is provided a motor 40 which is effective in driving the guide screws 16 via a chain drive to the sprocket wheel 41, which can be activated through the coupling 42.

Electric current is supplied to the rotatable part with the aid of a swivel device 50 having slip-rings which supply cables (not shown) drawn through the centre tube. For earthing purposes, particularly necessary when carrying out electrical welding processes, there is fitted to the bottom of the rotatable structure an assembly which comprises a fixed copper-coated slip-ring 51 and four carbon-brush devices 52.

It will be understood from the aforegoing that the rotatable hollow shaft 6 and the columns 15 and guide spindles 16 connected rigidly thereto form a substantially planar frame structure which is transportable insomuch as it can be laid flat. However, transverse arms, such as those references 60, 61 in Fig. 3 and the A-A view of Fig. 4 are preferably fitted to the machine. Wooden slats and guard rails 62 can be provided herewith, to construct a working platform.

In the case of the illustrated exemplifying method, the application of weld material to the chamber wall is effected over a height of 1400 mm, while fine-machining of the wall surface is effected over a height of 2250 mm. The chamber wall in the illustrated case comprised black goods coated with stainless steel plates, although it was difficult to establish the true nature of the material due to repair work previously carried out. The maximum output of the machine could be increased by 10% by restructuring, which involved changing or altering the chamber profile.

The chamber was machined or worked in the following manner. A template 16" was mounted firmly in the slide path, in accordance with the desired wall profile. A milling tool with associated guide motor was fitted to the tool holder 16' and the chamber wall was machined roughly, inter alia by removing material to a depth of 6 mm over part of the chamber wall. Those defects thus exposed were repaired manually by welding. The chamber wall was then machined with a lathe tool at a rising gradient of 2 mm and a cutting depth of 1 mm.

Two welding apparatus ESAB 470 for fully automatic MIG-welding were mounted side-by-side at different levels on the tool holder. The work was commenced by applying a weld string by hand peripherally from below, whereafter the weld strings were applied in tight spirals upwardly, each 2-3 mm radially and approximately equally as much axially. By laying-on material successively, thicknesses were built-up which varied up towards 6 mm, depending upon the profile desired. The surface was first machined roughly and then finely with a cutting depth of 0.4 mm and a gradient rise of 0.6 mm. A subsequent check was made to establish the extent to which water was able to enter pores which required fine repair work and final polishing/grinding.

The renovation achieved the desired result. Losses were reduced by 1.5% and the maximum power output was increased by about 10% (the water discharge rate increased from 120 to 132 m³/s) as a result of the combined effect of restructuring the runner and changing the profile of the chamber.

## Claims

1. A method for renovating a vertical turbine chamber in hydroelectric power stations, characterized in that

a) a horizontal, first cruciform support (2) is attached to the wall of the turbine chamber in a lower region thereof;

b) a horizontal, second cruciform support (20) is attached adjacent the inlet of the turbine chamber;

c) there is positioned on the first cruciform support (2) and centered in relation to the turbine chamber, a rotatable structure comprising a central pillar (6) which is rotatably mounted on the first cruciform support by a thrust bearing (5) and a radial bearing (8), wherein the centre pillar (6) is journalled in a radial bearing (11) mounted on the second cruciform support (20), and wherein the centre pillar has stationarily mounted thereon a slide path comprising columns (15) and guide screws (16) which extend parallel with the centre pillar;

d) a main motor (30) is arranged to rotate the centre pillar and also the guide screws (16) via drive wheels (41, 29) provided on an axle rotatably mounted in the centre pillar;

e) a tool holder (16') is mounted on a carriage journalled in the slide path, said tool carrier being intended to accommodate successively tools for carrying out cutting work and welding equipment for applying weld material,

f) and in that the wall of the turbine chamber is first machined roughly with a cutting tool and fresh material is welded onto the wall as required, whereafter machining and planing of the wall surface is effected by means of the tools fitted to the tool holder until the wall of the turbine chamber obtains the profile desired.

2. A method according to Claim 1, characterized in that a template (16'') is mounted on the slide path fixedly connec ted to the centre pillar , and in that the tool holder (16') has mounted thereon a hydraulic template follower to which the machine tool is attached so as to produce a desired wall profile by following the template.

3. A method according to Claim 1, characterized in that a first measuring bar provided with a measuring heᴗd is arranged parallel with the centre pillar (6) for the purpose of obtaining a height coordinate, in that a second measuring bar provided with a measuring head is arranged in the tool holder for the purpose of obtaining a radial coordinate, and in that the measuring values obtained by the measuring heads are used to produce a desired wall profile by comparison with stored data.

4. A machine for renovating vertical turbine chambers in hydroelectric power stations, characterized in that the machine comprises

a) a first cruciform support (2) which is intended to be attached to the lower part of a turbine chamber and against the wall of said chamber,

b) a second cruciform support (20) which is intended for attachment to the upper part of a turbine chamber,

c) a rotatable unit intended to be mounted between the cruciform supports attached to the turbine chamber, said rotatable unit being mounted in

(i) a thrust bearing (5) supported against the first cruciform support,

(ii) a radial bearing (8) mounted in the first cruciform support,

(iii) a radial bearing (11) mounted in the second cruciform support, and which rotatable unit includes

(i) a hollow tubular centre pillar (6) which is journalled in said bearings,

(ii) columns (15) which are fixedly connected to the centre pillar (6) and extend parallel therewith and which form a slide path for an axially movable tool slide which is rotatable with the centre pillar (6),

(iii) with guide screws (16) extend with the columns (15) and which are rotatably journalled and screw-jointed with the tool slide,

d) a drive motor (30) for rotation of the centre pillar and components fixedly connected thereto, and

e) a tool holder (16') which can be mounted to the tool slide.

5. A machine according to Claim 3, characterized in that the drive motor (30) is coupled to the centre pillar (6) via drive chains and to the guide screws (16) via guide chains and a transmission axle rotatably mounted within the centre pillar, the rotational movement of the centre pillar and the rotational movement of the guide screws being positively guided with one another.

6. A machine according to Claim 3, characterized in that a counterweight (21) is mounted within the centre pillar (6); in that line roller (22) are fitted in openings in the wall of the centre pillar; and in that lines are drawn from the counterweight over the line rollers to the tool slide in order to at least partially relieve the weight of said slide.

7. A machine according to Claim 3, characterized in that the thrust bearing (5) is a ball bearing, and in that the radial bearings are plain bearings.

8. A machine according to Claim 3, characterized in that rigidly connected to the centre pillar (6) is a template (16″) which can be arranged parallel with said pillar and which has a profile corresponding to the desired profile of a turbine chamber wall; and in that the tool holder (16') is provided with a follower for following the desired profile shape during a machining or working operation.

9. A machine according to Claim 3, characterized in that the tool holder (16') includes means for attaching at different height levels and for laterally displacing two automatic MIG-welding machines for successively applying two welding strings for each revolution carried out by the tool holder.

10. A machine according to Claim 3, characterized in that the centre pillar (6), the columns (15) and the guide screws (16) are mounted in a common plane, to form a flat-sided frame structure which can be laid down on, for example, the floor of a transport vehicle for the purpose of transporting said frame structure.

FIG.1

FIG.2

FIG.3

EP 0 304 408 A2

FIG. 4

FIG. 5